# EUROPÄISCHE PATENTSCHRIFT

(11) **EP 0 367 965 B1**
(45) Veröffentlichungstag und Bekanntmachung des Hinweises auf die Patenterteilung: **05.01.1994**
(21) Anmeldenummer: 89117725.5
(22) Anmeldetag: 26.09.1989
(51) Int. Cl.: D21H 19/74, D21H 19/84, D21H 17/34

(54) **Papierklebebänder**
Adhesive-paper tapes
Bandes de papier adhésif

(30) Priorität: 19.10.1988 DE 3835507
(43) Veröffentlichungstag der Anmeldung: 16.05.1990
(73) Patentinhaber: Beiersdorf Aktiengesellschaft, 20245 Hamburg (DE)
(72) Erfinder: Knolle, Herbert, Dr., D-2057 Reinbek (DE); Wille, Romanus, Dr., D-7615 Zell am Harmersbach (DE)

(56) Entgegenhaltungen:
- EP-A- 0 213 596
- DE-A- 2 809 422
- US-A- 3 483 018

## Beschreibung

Die Erfindung betrifft Papierklebebänder.

Papierklebebänder, die heute für die vielfältigsten Aufgaben eingesetzt werden (Maler-/Lackierer-Masking Tapes, High Temperature Masking Tapes, Gurtungsklebebänder für elektronische Bauelemente, Oberflächenschutzklebebänder, Verpackungsklebebänder usw.) haben folgende Nachteile:
- Sie sind rauh. Der Verwender, insbesondere der professionelle Verwender, der diese Klebebänder häufig an den Untergrund andrücken oder anreiben muß, kann sich Verletzungen an den Fingerkuppen zuziehen.
- Da eine große Menge an Klebstoff, Primer und Release Coat ausschließlich darauf verwendet wird, die Kreppfalten aufzufüllen, und die konfektionierten Klebebänder überdies kurzlebige Erzeugnisse sind, wird die Umwelt bei der Entsorgung unnötig belastet. Abgesehen davon ist die Fertigung äußerst unökonomisch.
- Beim althergebrachten Kreppprozeß läßt man ein noch feuchtes Papiervlies gegen einen Kreppschaber stoßen. Dadurch entstehen die typischen Kreppfalten und die Papiere werden dicker. Dicke Papiere sind aber nachteilig für einige Verwendungszwecke, z.B. das Abkleben beim Lackieren, da die Höhe der Lackkante von der Dicke des maskierenden Klebebandes abhängt. Erwünscht ist eine praktisch unsichtbare niedrige Lackkante.

Es bestand daher seit langer Zeit das Bedürfnis nach einem möglichst glatten aber dennoch den anwendungstechnischen Forderungen entsprechenden Papierklebeband.

Diesen Mißständen abzuhelfen, bemühen sich die Papier- und Klebebandfachleute weltweit. Ein Weg, der von vielen beschritten wurde, ist, dehnfähige, nicht gekreppte Papiere einzusetzten, wie in US-A-3,503,495 beschrieben. Hier wird das Papier zwischen einem Stahl/Steinzylinder und einer gummierten Walze durchgeführt. Durch die unterschiedliche Winkelgeschwindigkeit beider Walzen wird eine Art Kreppung (superfine creping) erreicht. Gleichzeitig wird das Papier durch den Druck der gummierten Walze komprimiert und damit weniger dick. Jedoch haben sich in der Praxis derartige Papierträger nicht bewähren können, und auch 18 Jahre nach der Erteilung dieses US-Patents werden die Papierträger der handelsüblichen Papierklebebänder nach dem Kreppschaberverfahren hergestellt. Dies macht deutlich, daß der gemäß diesem U.S.-Patent erzielbare Dehnungsbereich nicht bzw. nicht ausreichend anwendungsgerecht ist.

Ein anderer Weg ist, das Papiergewicht zu verringern. Ein Beispiel dieses Versuches ist ein gekrepptes Papier der Firma Gessner, Bruckmühl, das seit einigen Jahren im Handel ist und folgende Eigenschaften besitzt.

| | |
|---|---|
| - Gewicht | 40 g/m² |
| - Dicke | 0,12 - 0,13 mm |
| - Höchstzugkraft | 38 N/15mm |
| - Dehnung | 11 - 15 % |

Die Menge an Imprägniermittel liegt bei handelsüblichen Papierklebebändern gewöhnlich bei ca. 50 - 60 Gew.-% des Rohfasergewichtes. (In US-A-3,503,495 wird sogar von 80 Gew.-% Imprägniermitteleintrag gesprochen). Die Untergrenze dürfte, bei Ausnutzung sämtlicher verfahrenstechnischer Raffinessen, bei 35 Gew.-% liegen. Auch das Papier der Firma Gessner erweist sich erst ab einem Imprägniermitteleintrag von 55 Gew.-% für die weiteren Veredelungsstufen als geeignet.

Ein nach dem Kreppschaberverfahren hergestelltes Kreppapier zeigt auf der einen Seite scharf ausgeprägte, auf der anderen Seite dagegen abgerundete Kreppfalten. Um dem Verwender den Eindruck einer geringeren Rauhigkeit zu vermitteln, wird in der Regel die Seite mit der abgerundeten Faltung mit Release Coat versehen. Dennoch beträgt die nötige Menge an Release Coat normalerweise 6 - 8 g/m², da ein beträchtlicher Teil des während der Beschichtung noch flüssigen (gelöst oder dispergiert) Release Coat's in die Räume zwischen den Falten fließt.

Für den Primer gilt das gleiche in verstärktem Maße, zumal dieser meist auf der rauheren Seite aufgetragen wird.

Auch für das Auftragen der Klebemasse sind rauhe Untergründe unvorteilhaft, jedoch wird die Menge an Klebemasse auch von anderen Faktoren bestimmt als von den Kreppfalten allein.

Aufgabe war es also, Papierklebebänder ohne die offensichtlichen Mängel des Standes der Technik, sowie Verfahren zu deren Herstellung zu entwickeln.

Erfindungsgemäß wird diese Aufgabe gelöst durch mikrogekrepptes, imprägniertes und beschichtetes Papier, welches nach dem Clupak-Verfahren hergestellt wurde. Die Beschichtungsmaterialien können gewählt werden aus der Gruppe der Primer, der klebstoffabweisenden Substanzen ("Release coats") und der Selbstklebemassen.

Mikrogekreppte Papiere, welche an sich bekannt sind, werden nicht auf herkömmliche Weise mit Kreppschabern erzeugt und weisen keine Kreppfalten auf. Vielmehr zeigen diese Papiere - nur deutlich in der Vergrößerung sichtbar - ein äußerst feines, vielfältig verschlungenes Faltenmuster, das am ehesten mit menschlichen Fingerabdrücken verglichen werden kann. Sie können hergestellt werden, indem feuchte Papierbahnen zwischen rotierenden Walzen und rotierenden elastischen Bahnen unter Andruck transportiert werden. Dabei werden die Papierbahnen der Länge nach gestaucht. Dennoch sind dünne Papiere (deutlich dünner als 0,10 mm) in diesem Verfahren erhältlich, wie beispielsweise in US-A-2,624,245 beschrieben.

Es wurde lange Zeit angenommen, daß sich derartiges mikrogekrepptes Papier nicht zu Papierklebebändern verarbeiten läßt (z.B. US-A-3,503,495, Spalte 4, Zeile 71 bis Spalte 5, Zeile 20), da saugfähiges Papier entweder bei der Führung durch das Beschichtungssystem zerreißen bzw. nach dem Beschichtungsvorgang nicht mehr dehnbar sein würde.

Erstaunlicherweise sind saugfähige, mikrogekreppte Papiere welche nach dem Clupak-Verfahren hergestellt wurden, mit den Parametern

| | |
|---|---|
| - Gewicht | 45-80 g/m² |
| - Dehnfähigkeit | 8-20 % |
| - Höchstzugkraft | mindestens 35 N/15 mm |
| - Dicke | höchstens 0,13 mm |

einfach zu imprägnieren und mit Primer, Release Coat und Selbstklebemasse zu beschichten, ohne daß die geschilderten Vorurteile sich bewahrheiten. Zudem sind die auf diese Weise gefertigten Produkte den herkömmlichen Papierklebebändern deutlich überlegen.

Vorteilhaft sind Papiere, die bei einem Gewicht von 70 - 80 g/m² höchstens 0,12 mm dick sind.

Vorzugsweise werden Papiere gewählt mit den Parametern

| | |
|---|---|
| - Gewicht | 50-60 g/m² |
| - Dehnfähigkeit | 12-17 % |
| - Höchstzugkraft | mindestens 35 N/15 mm |
| - Dicke | höchstens 0,10 mm. |

Vorteilhaft ist des weiteren, Papiere einzusetzen, die schon bei einem Imprägniermitteleintrag von 15 %, bezogen auf das Rohpapiergewicht ausreichend imprägniert sind.

Die Papierdicke und das Papiergewicht können im erfindungsgemäßen Rahmen so variiert werden, daß die unterschiedlichsten Anwendungsgebiete abgeckt werden. So eignet sich ein schweres Band vorteilhaft als Gurtungsband für elektronische Bauteile. Ein leichtes, dünnes Band ist vorzüglich als Abklebeband für Lackierarbeiten geeignet.

Als Imprägnierungsmittel sind grundsätzlich alle handelsüblichen Zusammensetzungen geeignet, vorzugsweise werden polyacrylathaltige Dispersionen oder SBR-Latex verwendet, beispielsweise Acronal 500D (BASF) oder Butofan 490D (BASF). Auch Polyvinylacetatlatices sind günstig. Es kann vorteilhaft sein, den Imprägnierungsmitteln Stabilisatoren beizumischen.

Die Wahl des Primers, des Release coats und der Klebemassen ist nicht kritisch. Als Release Coat eignen sich vorzugsweise Polyacrylate wie Primal 253 (Rohm + Haas), SBR-Latices, Polyvinylacetate, Silikone oder Fluorkohlenwasserstoffe.

Bevorzugt werden Zentrifugenlatices, besonders bevorzugt im Gemisch mit den üblichen Stabilisatoren als Primer gewählt.

Vorteilhafte Klebemassen sind Polyacrylate, SIS-Kautschuke, SBS-Kautschuke, Polyisobutylene und Naturkautschuke, jeweils in Verbindung mit natürlichen oder synthetischen Harzen.

Die Konfektionierung erfolgt, indem das mikrogekreppte Papier mit dem Imprägniermittel getränkt und dann beschichtet wird. Vorteilhaft werden Klebebänder ein- oder beidseitig mit der Primermasse beschichtet und mit einer abschließenden Schicht klebstoffabweisender Substanz ("Release Coat") auf der einen Seite und einer abschließenden Schicht einer Selbstklebemasse auf der anderen Seite versehen.

Das konfektionierte Papier kann dann auf Hülsen gerollt und verpackt werden.

Der Zuschnitt erfolgt, je nach den Erfordernissen und den technischen Gegebenheiten vor oder nach der Konfektionierung.

### Beispiel 1

In diesem Beispiel wird ein Vielzweckklebeband (general purpose Klebeband) beschrieben, das sich als Gurtungsband für elektronische Bauelemente, als High Temperature Masking Tape und als normales Maler/Lackiererklebeband einsetzen läßt.

Als Träger dient ein nach dem Clupak-Verfahren hergestelltes Papier, mit folgenden charakteristischen Eigenschaften:

| | |
|---|---|
| - Gewicht | 56,5 g/m² |
| - Dicke | 0,09 mm |
| - Höchstzugkraft | 48 N/15 mm |
| - Dehnung | 17 ± 2 % |

Eine für die nachfolgenden Verarbeitungsprozesse, aber auch unter anwendungstechnischer Betrachtung ausreichende Imprägniermittelmenge wurde mit 8 g/m², d.h. 14,2 Gew.-% bezogen auf das Rohpapiergewicht erreicht. Als Imprägniermittel wurde Acronal 500D eingesetzt. Als Primer diente handelsüblicher Zentrifugenlatex. Die Menge an Release Coat läßt sich ohne Schwierigkeiten und ohne Verlust an Releaseeigenschaften auf 1 - 2 g/m² reduzieren.

Die Dicke des fertigen Klebebands beträgt 0,11 - 0,115 mm. Die Höchstzugkraft beträgt 74 N/15 mm, die Dehnung entspricht mit 15 - 19 % der des Rohpapiers.

Trotz der hohen Dehnungswerte ist das erfindungsgemäße Papierklebeband nahezu so glatt wie nicht gekreppte Papiere, wobei die Glättequalität durch das erfindungsgemäße Verfahren noch sehr verbessert wurde.

### Beispiel 2

In diesem Beispiel wird ein Klebeband beschrieben, das sich als general purpose Maler-/Lackiererklebeband einsetzen läßt.

Als Träger dient ebenfalls ein nach dem Clupak-Verfahren hergestelltes Papier, mit folgenden charakteristischen Eigenschaften:

| | |
|---|---|
| - Gewicht | 55,6 g/m² |
| - Dicke | 0,09 mm |
| - Höchstzugkraft | 49,6 N/15 mm |
| - Dehnung | 15 ± 1 % |

Die optimale Imprägniermittelmenge wurde mit 15 - 18 g/m² ermittelt. Das entspricht 30 Gew.-% bezogen auf das Rohpapiergewicht. Als Imprägniermittel wurde auch hier Acronal 500D eingesetzt. Als Primer diente handelsüblicher Zentrifugenlatex.

Die Menge an Release Coat (Primal 253) läßt sich ebenfalls ohne Schwierigkeiten und ohne Verlust an Releaseeigenschaften bei einem analogen Release System wie in Beispiel 1 auf 1 - 2 g/m² reduzieren.

Das fertige Klebeband mit einer Standard-Polyisobutylenklebemasse mit einem Klebemassegewicht von 55 g/m² weist nur eine Dicke von 0,125 - 0,135 mm auf. Die Höchstzugkraft beträgt 73,5 N/15 mm, die Dehnung entspricht mit 15 - 16 % dem Rohpapier.

## Patentansprüche

1. Papierklebeband, dadurch erhältlich, daß
saugfähiges Papier, welches nach dem Clupak-Verfahren hergestellt wurde
und welches
- ein Gewicht von 45 - 80 g/m²
- eine Dehnfähigkeit von 8 - 20 %
- eine Höchstzugkraft von mindestens 35 N/15 mm
- eine Dicke von höchstens 0,13 mm
besitzt, nach an sich bekannten Verfahren imprägniert und beschichtet wird.

2. Papierklebeband nach Anspruch 1, dadurch gekennzeichnet, daß das Papier nach dem Imprägnieren ein- oder beidseitig mit einer Primermasse beschichtet und auf der einen Seite mit einer abschließenden Schicht klebstoffabweisender Substanz ("Release Coat") und auf der anderen Seite mit einer abschließenden Schicht einer Selbstklebemasse versehen wird.

3. Papierklebeband nach Anspruch 1 oder 2, dadurch gekennzeichnet, daß das Papier
- ein Gewicht von 50 - 60 g/m²
- eine Dehnfähigkeit von 12 - 17 %
- eine Höchstzugkraft von mindestens 35 N/15 mm
- eine Dicke von höchstens 0,10 mm
besitzt.

4. Papierklebeband nach Anspruch 1, 2 oder 3, dadurch gekennzeichnet, daß das Imprägniermittel gewählt wird aus der Gruppe der
- Polyacrylate
- SBR-Latices
- Polyvinylacetatlatices.

5. Papierklebeband nach einem der Ansprüche 1 - 4, dadurch gekennzeichnet. daß die Release Coats gewählt werden aus der Gruppe der Polyacrylate, SBR-Latices, Polyvinalacetate, Silkone, Fluorkohlenwasserstoffe.

6. Papierklebeband nach einem der Ansprüche 1 - 5, dadurch gekennzeichnet, daß die Primer gewählt werden aus der Gruppe der Zentrifugenlatices.

7. Papierklebeband nach einem der Ansprüche 1 - 6, dadurch gekennzeichnet, daß die Selbstklebemassen gewählt werden aus der Gruppe der
- SIS-Kautschuke
- SBS-Kautschuke
- Polyacrylate
- Polyisobutylene
- Naturkautschuke,
jeweils in Verbindung mit natürlichen und/oder synthetischen Harzen.

8. Verfahren zur Herstellung eines Papierklebebandes nach einem der Ansprüche 1 - 7, dadurch gekennzeichnet, daß
saugfähiges Papier, welches nach dem Clupack-Verfahren hergestellt wurde
und welches
- ein Gewicht von 45 - 80 g/m²
- eine Dehnfähigkeit von 8 - 20 %
- eine Höchstzugkraft von mindestens 35 N/15 mm
- eine Dicke von höchstens 0,13 mm
besitzt, imprägniert und beschichtet wird, wobei die Beschichtungsmaterialien aus der Gruppe der Primer, der klebstoffabweisenden Substanzen ("Release Coats") und der Selbstklebemassen gewählt werden.

9. Verwendung eines Papierklebebandes nach einem der Ansprüche 1 - 7 als
- Klebeband
- Gurtungsband für Kleinteile
- Maskierungsband
- Isolierband
- Abdichtungsband.

## Claims

1. Adhesive paper tape, obtainable by impregnating and coating, by means of processes known per se, absorbent paper which, has been produced by the Clupak process and which has
- a weight of 45 - 80 g/m²,
- an extensibility of 8 - 20%,
- a maximum tensile strength of at least 35 N/15 mm and
- a thickness of at most 0.13 mm.

2. Adhesive paper tape according to Claim 1, characterized in that, after impregnation, the paper is coated on one side or on both sides with a primer composition and is provided, on one side, with a final layer of adhesive-repellent substance (release coat) and, on the other side, with a final layer of a self-adhesive composition.

3. Adhesive paper tape according to Claim 1 or 2, characterized in that the paper has
- a weight of 50 - 60 g/m²,
- an extensibility of 12 - 17%,
- a maximum tensile strength of at least 35 N/15 mm and
- a thickness of at most 0.10 mm.

4. Adhesive paper tape according to Claim 1, 2 or 3, characterized in that the impregnating agent is selected from the group comprising
- polyacrylates
- SBR latices and
- polyvinyl acetate latices.

5. Adhesive paper tape according to one of Claims 1 - 4, characterized in that the release coats are selected from the group comprising the polyacrylates, SBR latices, polyvinyl acetates, silicones and fluorohydrocarbons.

6. Adhesive paper tape according to one of Claims 1 - 5, characterized in that the primers are selected from the group comprising the centrifuged latices.

7. Adhesive paper tape according to one of Claims 1 - 6, characterized in that the self-adhesive compositions are selected from the group comprising the
- SIS rubbers,
- SBS rubbers,
- polyacrylates,
- polyisobutylenes and
- natural rubbers,
each in conjunction with natural and/or synthetic resins.

8. Process for producing an adhesive paper tape according to one of Claims 1 - 7, characterized in that absorbent paper which, has been produced by the Clupak process and which has
- a weight of 45 - 80 g/m²,
- an extensibility of 8 - 20%
- a maximum tensile strength of at least 35 N/15 mm and
- a thickness of at most 0.13 mm,
is impregnated and coated, the coating materials being selected from the group comprising primers, adhesive-repellent substances (release coats) and self-adhesive compositions.

9. Use of an adhesive paper tape according to one of Claims 1 - 7 as an
- adhesive tape,
- packaging tape for small components,
- masking tape,
- insulating tape
- sealing tape.

## Revendications

1. Bande de papier adhésif, obtenue en imprégnant et en enduisant, selon un procédé connu en soi, un papier absorbant fabriqué selon le procédé Clupak et possédant
- un poids de 45 - 80 g/m²,
- une capacité d'allongement de 8 - 20 %,
- une limite de résistance à la traction d'au moins 35 N/15 mm,
- une épaisseur maximale de 0,13 mm.

2. Bande de papier adhésif selon la revendication 1, caractérisée en ce qu'après l'imprégnation, le papier est enduit d'un côté ou des deux d'une masse primaire et qu'on lui applique une couche finale de substance anti-adhérante (couche anti-adhésive) sur un côté et une couche finale de masse auto-adhésive sur l'autre côté.

3. Bande de papier adhésif selon la revendication 1 ou 2, caractérisée en ce que le papier possède
- un poids de 50 - 60 g/m²,
- une capacité d'allongement de 12 - 17 %,
- une limite de résistance à la traction d'au moins 35 N/15 mm,
- une épaisseur maximale de 0,10 mm.

4. Bande de papier adhésif selon la revendication 1, 2 ou 3, caractérisée en ce que l'agent d'imprégnation est choisi parmi le groupe des
- polyacrylates
- latex SBR
- latex de polyvinylacétate.

5. Bande de papier adhésif selon l'une quelconque des revendications 1 à 4, caractérisée en ce que les couches anti-adhésives sont choisies parmi le groupe des polyacrylates, des latex SBR, des polyvinylacétates, des silicones, des hydrocarbures fluorés.

6. Bande de papier adhésif selon l'une quelconque des revendications 1 à 5, caractérisée en ce que les couches primaires sont choisies parmi le groupe des latex centrifuges.

7. Bande de papier adhésif selon l'une quelconque des revendications 1 à 6, caractérisée en ce que les masses auto-adhésives sont choisies parmi le groupe des
- caoutchoucs SIS
- caoutchoucs SBS
- polyacrylates
- polyisobutylènes
- caoutchoucs naturels,
chacun en combinaison avec des résines naturelles et/ou synthétiques.

8. Procédé de fabrication d'une bande de papier adhésif selon l'une quelconque des revendications 1 à 7, caractérisé en ce que l'on imprègne et enduit un papier absorbant fabriqué selon le procédé Clupak et possédant
- un poids de 45 - 80 g/m²,
- une capacité d'allongement de 8 - 20 %,
- une limite de résistance à la traction d'au moins 35 N/15 mm,
- une épaisseur maximale de 0,13 mm,
les matières d'enduction étant choisies parmi le groupe des couches primaires, des substances anti-adhérantes (couches anti-adhésives) et des masses auto-adhésives.

9. Utilisation d'une bande de papier adhésif selon l'une quelconque des revendications 1 à 7, en tant que
- bande adhésive
- bande de gainage pour petits éléments
- cache en ruban
- bande d'isolation
- bande d'étanchéité.
